# EUROPÄISCHE PATENTSCHRIFT

(11) **EP 3 359 344 B1**
(45) Veröffentlichungstag und Bekanntmachung des Hinweises auf die Patenterteilung: **25.12.2019**
(21) Anmeldenummer: 16787353.8
(22) Anmeldetag: 04.10.2016
(51) Int. Cl.: B25J 9/00, B25J 9/08, B62D 57/02

(54) **MODULARES, SELBST-REKONFIGURIERBARES ROBOTERSYSTEM**
MODULAR, SELF-RECONFIGURABLE ROBOT SYSTEM
SYSTÈME ROBOTIQUE MODULAIRE POUVANT ÊTRE RECONFIGURÉ AUTOMATIQUEMENT

(30) Priorität: 05.10.2015 AT 508482015
(43) Veröffentlichungstag der Anmeldung: 15.08.2018
(73) Patentinhaber: Universität Innsbruck, 6020 Innsbruck (AT)
(72) Erfinder: GERSTMAYR, Johannes, 6020 Innsbruck (AT); PIEBER, Michael, 2325 Himberg (AT)
(74) Vertreter: Jell, Friedrich
(86) Internationale Anmeldenummer: PCT/EP2016/073703
(87) Internationale Veröffentlichungsnummer: WO 2017/060258

(56) Entgegenhaltungen:
- WEIHAI CHEN ET AL: "A novel spherical joint designed for metamorphic mechanism", ROBOTICS, AUTOMATION AND MECHATRONICS, 2008 IEEE CONFERENCE ON, IEEE, PISCATAWAY, NJ, USA, 21. September 2008 (2008-09-21), Seiten 976-981, XP031442091, ISBN: 978-1-4244-1675-2
- ANDREAS LYDER ET AL: "Mechanical design of odin, an extendable heterogeneous deformable modular robot", INTELLIGENT ROBOTS AND SYSTEMS, 2008. IROS 2008. IEEE/RSJ INTERNATIONAL CONFERENCE ON, IEEE, PISCATAWAY, NJ, USA, 22. September 2008 (2008-09-22), Seiten 883-888, XP031348420, ISBN: 978-1-4244-2057-5 in der Anmeldung erwähnt
- LIGE ZHANG ET AL: "Design and motion analysis of tetrahedral rolling robot", INTELLIGENT ROBOTS AND SYSTEMS (IROS), 2010 IEEE/RSJ INTERNATIONAL CONFERENCE ON, IEEE, PISCATAWAY, NJ, USA, 18. Oktober 2010 (2010-10-18), Seiten 502-507, XP031920403, DOI: 10.1109/IROS.2010.5650461 ISBN: 978-1-4244-6674-0
- WOO HO LEE ET AL: "Distributed computation of dynamics in reconfigurable robotics", INTELLIGENT ROBOTS AND SYSTEMS, 1999. IROS '99. PROCEEDINGS. 1999 IEEE /RSJ INTERNATIONAL CONFERENCE ON KYONGJU, SOUTH KOREA 17-21 OCT. 1999, PISCATAWAY, NJ, USA,IEEE, US, Bd. 3, 17. Oktober 1999 (1999-10-17), Seiten 1561-1566, XP010362383, ISBN: 978-0-7803-5184-4

## Beschreibung

### Technisches Gebiet

Die Erfindung betrifft ein modulares, selbst-rekonfigurierbares Robotersystem mit mehreren miteinander verbundenen Einzelmodulen, die je einen tetraederförmigen Gestellrahmen mit Rahmengelenken als Knotenpunkte und mit an diese Knotenpunkte anschließenden, längenverstellbaren Gestellholmen aufweisen, und mit mehreren, zwischen den aneinander angrenzenden Gestellholmen der jeweiligen Einzelmodule vorgesehenen, lösbaren Verbindungen aus mehreren zusammenwirkenden Verbindungselementen an den jeweiligen Einzelmodulen.

### Stand der Technik

Aus "A Novel Spherical Joint Designed for Metamorphic Mechanism", W. Chen et al., IEEE 2008, Seite 976, ist ein solches modulares, selbst-rekonfigurierbares Robotersystem bekannt.

Aus "Mechanical Design of Odin, an Extendable Heterogeneous Deformable Modular Robot", A. Lyder et al., IROS 2008, IEEE/RSJ Seite 883, sind weitere modulare, selbst-rekonfigurierbare Robotersysteme (MSR) aus mehreren Einzelmodulen mit tetraederförmigem Gestellrahmen bekannt. Durch die Selbst-Rekonfigurierbarkeit sind diese Robotersysteme in der Lage, unterschiedlichste Aufgaben zu bewältigen, flexibel auf unvorhergesehene Ereignisse zu reagieren und im Fall eines Modulausfalls sich selbst zu reparieren bzw. umzukonfigurieren. Hierzu bilden sich diese Einzelmodule aus längenvertellbaren Gestellholmen und Knotenpunkten aus, an denen die Gestellholme beweglich angelenkt sind. Die Einzelmodule sind über lösbare Verbindungselemente miteinander verbunden, wobei diese Verbindungselemente entweder von den längenverstellbaren Gestellholmen oder den Knotenpunkten ausgebildet werden - wodurch derartige Robotersysteme eine vergleichsweise hohe Komplexität und einen hohen Steueraufwand erfordern. Dies insbesondere dann, wenn dieses Robotersystem mit einem weiteren Einzelmodul ergänzt werden soll und die Einzelmodulen zueinander ausgerichtet werden müssen.

### Darstellung der Erfindung

Die Erfindung hat sich daher die Aufgabe gestellt, ein modulares, selbst-rekonfigurierbares Robotersystem der eingangs geschilderten Art zu schaffen, welches sich durch geringe Komplexität und geringen Steueraufwand auszeichnet.

Die Erfindung löst die gestellte Aufgabe dadurch, dass wenigstens ein Einzelmodul mindestens eine Ausrichteinrichtung aufweist, die mit mindestens zwei Verbindungselementen zu deren parallelen Längsausrichtung zusammenwirkt, welche Verbindungselemente je an einem Gestellholm der an einen gemeinsamen Knotenpunkt anschließenden Gestellholme drehbar gelagert sind.

Sind die lösbaren Verbindungen zwischen den aneinander angrenzenden Gestellholmen der jeweiligen Einzelmodule vorgesehen, können die Einzelmodule als unabhängige, autarke Einheiten angesehen werden und unabhängig voneinander gesteuert werden. Weist zudem wenigstens ein Einzelmodul mindestens eine Ausrichteinrichtung auf, die mit mindestens zwei Verbindungselementen zu deren parallelen Längsausrichtung zusammenwirkt, welche Verbindungselemente je an einem Gestellholm der an einen gemeinsamen Knotenpunkt anschließenden Gestellholme drehbar gelagert sind, kann stets eine planparallele Ausrichtung der Gestellholme aneinander anschließender Einzelmodule gewährleistet werden. Dadurch wird ein besonders einfaches und zuverlässiges Zusammenwirken der Einzelmodule ermöglicht. Insbesondere können die Verbindungselemente dadurch stets ideal ausgerichtet sein, um die Verbindungen zwischen den autarken Einzelmodulen zuverlässig herzustellen. Dabei kann die Komplexität des Kopplungsmechanismus deutlich vermindert werden - was der Zuverlässigkeit des Robotersystems zuträglich ist.

Durch die autarken Einzelmodule kann zudem der Steueraufwand des Robotersystems, insbesondere das Herstellen und Lösen der Verbindungen von Einzelmodulen, erheblich reduziert werden.

Eine besonders kompakte Bauform des selbst-rekonfigurierbaren Robotersystems kann erreicht werden, wenn das Rahmengelenk als Kugelgelenk mit einem Kugelkopf, einer Innenschale und einer Außenschale ausgebildet ist, an welchen Kugelkopf, Innenschale und Außenschale je ein Gestellholm anschließt. Dabei kann ein gemeinsames Rahmengelenk für alle auf einen Knotenpunkt des tetraedrischen Einzelmoduls zulaufenden Gestellholme geschaffen werden - wobei damit eine ausreichende Bewegungsfreiheit sichergestellt werden kann.

Sind alle Gestellholme eines Einzelmoduls längenverstellbar ausgeführt, so kann das Einzelmodul beliebige tetraedrische Formen annehmen, wobei diese nur durch das Ausdehnungsvermögen der Gestellholme begrenzt werden. Weist zudem jeder Gestellholm an seinen gegenüberliegenden Anschlussseiten zu den Knotenpunkten je zwei voneinander unabhängig drehbar gelagerte Verbindungselemente auf, so kann bei jeder Längenänderung der Gestellholme stets die planparallele Lage der Ausrichteinrichtungen an dem Knotenpunkt zu den jeweiligen aneinander anschließenden Gestellholmen sichergestellt werden. Insbesondere kann auf diese Weise die planparallele Ausrichtung der Einzelmodule zu daran anschließenden Einzelmodulen gewährleistet werden. Ein einfach zu steuerndes Robotersystem kann auf diese Weise geschaffen werden.

Wirken je eine Ausrichteinrichtung mit zwei Verbindungselementen je an einem Gestellholm der an einen gemeinsamen Knotenpunkt anschließenden Gestellholme zu deren parallelen Längsausrichtung zusammen, so kann stets eine planparallele Ausrichtung der Verbindungselemente an der durch die jeweiligen Gestellholme dreieckigen Seitenfläche des Einzelmoduls gewährleistet werden. Ein einfaches Koppeln verschiedener Einzelmodule wird hierdurch ermöglicht bzw. kann auf reproduzierbare Art und Weise erfolgen.

Eine konstruktiv einfache Ausrichteinrichtung kann geschaffen werden, wenn die Ausrichteinrichtung ein zwischen den Verbindungselementen vorgesehenes Koppelgestänge aufweist. Hierbei kann eine standfeste Verbindung zwischen den Verbindungselementen geschaffen werden, welche die Ausrichteinrichtung reproduzierbar gegenüber den Gestellholmen ausrichten kann.

Die Konstruktion der Ausrichteinrichtung kann weiter verbessert werden, wenn das Koppelgestänge zwei über ein Schwenklager verbundene Koppelstangen aufweist, die mit dem jeweiligen Verbindungselement schwenkbar verbunden sind. Dadurch kann die Ausrichteinrichtung auf konstruktiv einfache Weise standfest den veränderlichen Abstand zwischen den Gestellholmen ausgleichen.

Die Einzelmodule können vergleichsweise einfach konstruktiv gelöst miteinander verbunden werden, wenn Verbindungselemente zwischen den Einzelmodulen eine Schnappverbindung ausbilden.

Wirkt die Ausrichteinrichtung mit zwei komplementären Verbindungselementen, insbesondere der Schnappverbindung, zu deren Längsausrichtung zusammen, kann das Koppeln der Einzelmodule von deren Lage unabhängiger und damit in der Handhabung weiter erleichtert werden.

Sind die Verbindungselemente am jeweiligen Gestellholm zusätzlich linear verschiebbar gelagert, kann dies zu einer deutlichen kinematischen Verbesserung am diesbezüglichen Einzelmodul führen.

### Kurze Beschreibung der Zeichnung

In den Figuren ist beispielsweise der Erfindungsgegenstand anhand einer Ausführungsvariante näher dargestellt. Es zeigen
- Fig. 1: eine dreidimensionale Ansicht auf ein Einzelmodul eines selbstrekonfigurierbaren Robotersystems,
- Fig. 2: Detailansichten auf einen Knotenpunkt des in Fig. 1 dargestellten Einzelmoduls und
- Fig. 3: eine dreidimensionale Ansicht auf das selbst rekonfigurierbare Robotersystem aus mehreren Einzelmodulen nach Fig. 1.

### Weg zur Ausführung der Erfindung

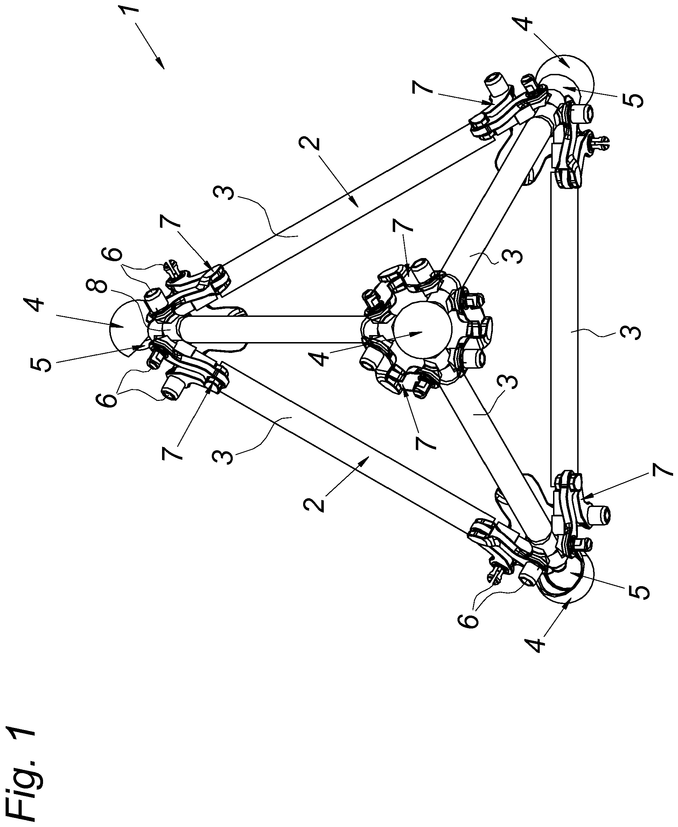

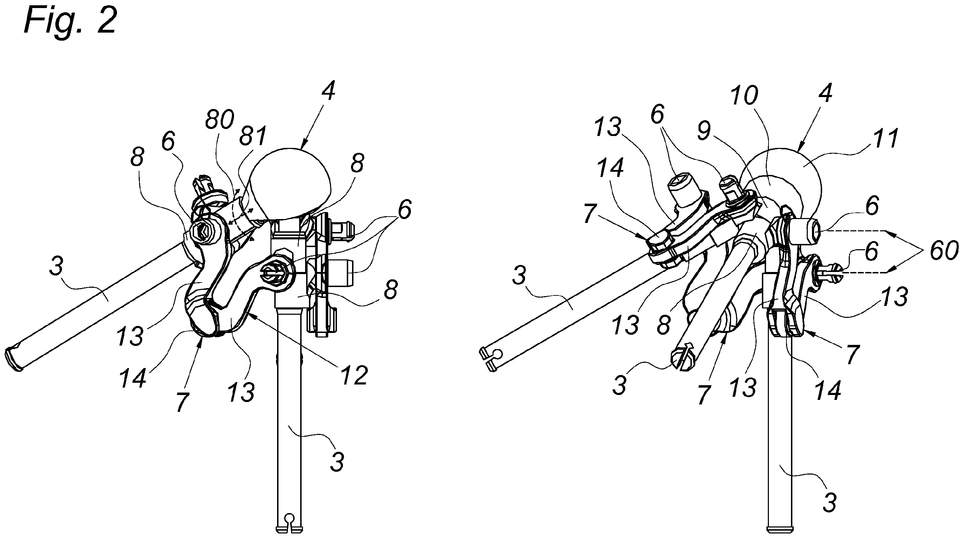

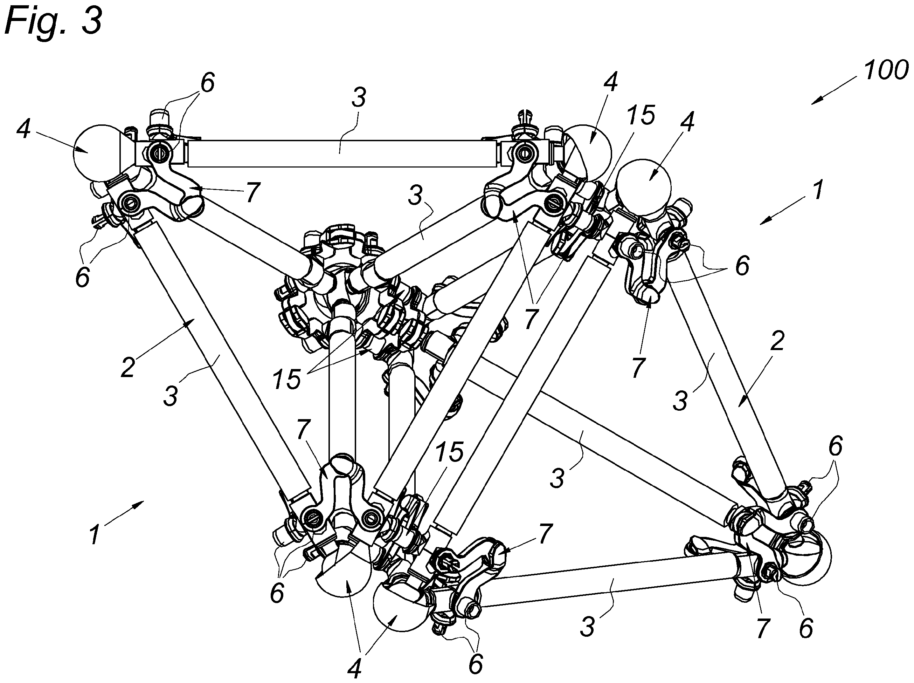

Gemäß Fig. 3 ist ein modulares, selbst-rekonfigurierbares Robotersystem 100 mit mehreren miteinander verbundenen Einzelmodulen 1 gezeigt. Die in Fig. 1 im Detail näher dargestellten Einzelmodule 1 zeigen jeweils einen tetraederförmigen Gestellrahmen 2, welcher aus insbesondere sechs Gestellholmen 3 aufgebaut ist. Jeweils drei der Gestellholme 3 laufen in einer Ecke des tetraederförmigen Gestellrahmens 2 zusammen und bilden einen Knotenpunkt 4. In diesen Knotenpunkten 4 sind die Gestellholme 3 über Rahmengelenke 5 dreh- und schwenkbar miteinander verbunden. An den Einzelmodulen 1 sind Verbindungselemente 6 vorgesehen, um mehrere Einzelmodule 1 lösbar miteinander zu verbinden - was in vergrößerter Darstellung der Fig. 2 entnommen werden kann. Diese Verbindungselemente 6 sind dabei derart angeordnet, dass zwischen den Gestellholmen 3 aneinander angrenzender Einzelmodule 1 eine lösbare Verbindung ausgebildet werden kann.

Die Verbindung kann steuerungstechnisch einfach hergestellt werden, weil erfindungsgemäß die Einzelmodule 1 Ausrichteinrichtungen 7 aufweisen, die mit den Verbindungselementen 6 zusammenwirkt. Und zwar sind die Verbindungselemente 6 an zwei am gemeinsamen Knotenpunkt 4 endenden Gestellholmen 3 drehbar gelagert, wodurch die Ausrichteinrichtungen 7 diese Verbindungselementen 6 zueinander ausrichten können bzw. mit diesen zu deren parallelen Ausrichtung deren Längsachsen 60 bzw. Längsausrichtung zusammenwirken, wie dies in Fig. 2 stellvertretend für alle gekoppelten Verbindungselemente 6 eingezeichnet worden ist. Dieses Ausrichten kann mit Hilfe einer elektrischen und/oder mechanischen Steuerung erfolgen, beispielsweise mit elektrischen und/oder mechanischen Stellgliedern zur Einstellung der jeweiligen Drehlage am Gestellholm 3.

Wie in Fig. 2 im Detail dargestellt, sind die Rahmengelenke 5 an den Knotenpunkten 4 als Kugelgelenk ausgeführt und setzen sich aus einem Kugelkopf 9, einer Innenschale 10 und einer Außenschale 11 zusammen, an die je ein Gestellholm 3 anschließt. Insbesondere sind die Gestellholme 3, mit dem Kugelkopf 9, der Innenschale 10 bzw. der Außenschale 11 aus einem Stück gefertigt.

Die Gestellholme 3 eines Einzelmoduls 1 sind längenverstellbar ausgeführt, wodurch das Einzelmodul 1 beliebige tetraedrische Formen annehmen kann. Hierzu weisen die Gestellholme 3 beispielsweise elektrisch und/oder hydraulisch angetriebene Arbeitszylinder auf, deren Kolbenstange und Zylindergehäuse je an einen Knotenpunkt 4 anschließt. Durch eine jedem Einzelmodul 1 zugeordnete Steuereinrichtung, die nicht näher dargestellt worden ist, kann die tetraedrische Form des Einzelmoduls 1 verändert werden.

Die Gestellholme 3 weisen außerdem an beiden ihrer gegenüberliegenden Knotenpunkte 4 jeweils zwei Verbindungselemente 6 auf, an welche die Ausrichteinrichtung 7 angreift. Die Verbindungselemente 6 sind dabei unabhängig voneinander um die Längsachse des Gestellholms 3 insbesondere frei drehbar gelagert - und zwar ist zwischen Gestellholm 3 und Verbindungselement 6 ein Radiallager 8 vorgesehen, das eine Drehung des Verbindungselements 6 in Drehrichtung 80 erlaubt. Zudem sind die Verbindungselemente 6 am jeweiligen Gestellholm 3 linear verschiebbar gelagert, und zwar in Axialrichtung 81, wie der Fig. 2 insbesondere zu entnehmen. Im Allgemeinen wird erwähnt, dass diese lineare Lagerung durch eine schwimmende Lagerung des Radiallagers 8 am jeweiligen Gestellholm 3 geschaffen wird. Neben dieser konstruktiven Vereinfachung führt dieser zusätzliche Freiheitsgrad zu einer deutlichen kinematischen Verbesserung am diesbezüglichen Einzelmodul 1. Es braucht nicht weiter erwähnt werden, dass diese schwimmende Lagerung auch durch ein Linearlager zwischen Verbindungselement 6 und Gestellholm 3 geschaffen werden kann.

Wie in Fig. 2 gezeigt, wirkt jeweils eine Ausrichteinrichtung 7 stets mit zwei Verbindungselementen 6 zusammen. Die Verbindungselemente 6 sind dabei mit jeweils zwei am selben Knotenpunkt 4 endenden, benachbarten Gestellholmen 3 verbunden. Durch das Zusammenwirken werden die Ausrichteinrichtung 7 und die beiden damit verbundenen Gestellholme 3 zueinander parallel ausgerichtet.

Dazu weisen die Ausrichteinrichtungen 7 jeweils ein Koppelgestänge 12 auf, welches zwischen den beiden Verbindungselementen 6 an den Gestellholmen 3 vorgesehen ist. Das Koppelgestänge 12 weist dabei zwei Koppelstangen 13 auf, die über ein Schwenklager 14 miteinander verbunden sind, um verschiedensten Winkelstellungen zwischen den jeweiligen Gestellholmen 3 folgen zu können. Die Koppelstangen 13 sind des Weiteren an je einem Verbindungselement 6 schwenkbar angelenkt.

Eine als Schnappverbindung mechanisch kuppelnde lösbare Verbindung zwischen den Einzelmodulen 1 ist in Fig. 3 zu erkennen. Die Ausrichteinrichtung 7 wirkt je mit zwei komplementären Verbindungselementen 6 der Schnappverbindung 15 zu deren Längsausrichtung zusammen, die in der Art einer Ringschnappverbindung kuppeln. Diese komplementären Verbindungselementen 6 der Ringschnappverbindung sind insbesondere der Fig. 2 zu entnehmen, nämlich eine segmentierte Biegefeder auf der einen Seite und eine hierfür einen Hinterschnitt aufweisende Steckbuchse auf der anderen Seite. Im Allgemeinen wird erwähnt, dass die Verbindungselemente 6 magnetisch und/oder mechanisch kuppeln können bzw. aktiv und/oder passiv betätigt die Verbindung erstellen und/oder lösen können.

## Patentansprüche

1. Modulares, selbst-rekonfigurierbares Robotersystem mit mehreren miteinander verbundenen Einzelmodulen (1), die je einen tetraederförmigen Gestellrahmen (2) mit Rahmengelenken (5) als Knotenpunkte (4) und mit an diese Knotenpunkte (4) anschließenden, längenverstellbaren Gestellholmen (3) aufweisen, und mit mehreren, zwischen den aneinander angrenzenden Gestellholmen (3) der jeweiligen Einzelmodule (1) vorgesehenen, lösbaren Verbindungen aus mehreren zusammenwirkenden Verbindungselementen (6) an den jeweiligen Einzelmodulen (1), **dadurch gekennzeichnet, dass** wenigstens ein Einzelmodul (1) mindestens eine Ausrichteinrichtung (7) aufweist, die mit mindestens zwei Verbindungselementen (6) zu deren parallelen Längsausrichtung zusammenwirkt, welche Verbindungselemente (6) je an einem Gestellholm (3) der an einen gemeinsamen Knotenpunkt (4) anschließenden Gestellholme (3) drehbar gelagert sind.

2. Robotersystem nach Anspruch 1, **dadurch gekennzeichnet, dass** das Rahmengelenk (5) als Kugelgelenk mit einem Kugelkopf (9), einer Innenschale (10) und einer Außenschale (11) ausgebildet ist, an welchen Kugelkopf (9), Innenschale (10) und Außenschale (11) je ein Gestellholm (3) anschließt.

3. Robotersystem nach Anspruch 1 oder 2, **dadurch gekennzeichnet, dass** alle Gestellholme (3) eines Einzelmoduls (1) längenverstellbar ausgeführt sind und dass jeder Gestellholm (3) an seinen gegenüberliegenden Anschlussseiten zu den Knotenpunkten (4) je zwei voneinander unabhängig drehbar gelagerte Verbindungselemente (6) aufweist.

4. Robotersystem nach Anspruch 3, **dadurch gekennzeichnet, dass** je eine Ausrichteinrichtung (7) mit zwei Verbindungselementen (6) je an einem Gestellholm (3) der an einen gemeinsamen Knotenpunkt (4) anschließenden Gestellholme (3) zu deren parallelen Längsausrichtung zusammenwirkt.

5. Robotersystem nach einem der Ansprüche 1 bis 4, **dadurch gekennzeichnet, dass** die Ausrichteinrichtung (7) ein zwischen den Verbindungselementen (6) vorgesehenes Koppelgestänge (12) aufweist.

6. Robotersystem nach Anspruch 5, **dadurch gekennzeichnet, dass** das Koppelgestänge (12) zwei über ein Schwenklager (14) verbundene Koppelstangen (13) aufweist, die mit dem jeweiligen Verbindungselement (8) schwenkbar verbunden sind.

7. Robotersystem nach einem der Ansprüche 1 bis 6, **dadurch gekennzeichnet, dass** die Verbindungselemente (6) zwischen den Einzelmodulen (1) eine Schnappverbindung (15) ausbilden.

8. Robotersystem nach einem der Ansprüche 1 bis 7, **dadurch gekennzeichnet, dass** die Ausrichteinrichtung (7) mit zwei komplementären Verbindungselementen (6) zu deren Längsausrichtung zusammenwirkt.

9. Robotersystem nach einem der Ansprüche 1 bis 8, **dadurch gekennzeichnet, dass** die Verbindungselemente (6) am jeweiligen Gestellholm (3) zusätzlich linear verschiebbar gelagert sind.

## Claims

1. Modular, self-reconfigurable robot system with several individual modules (1) connected to each other, each having a tetrahedral frame (2) with frame joints (5) as nodal point (4) and with length-adjustable frame beams (3) adjoining these nodal point (4), and with a plurality of detachable connections of a plurality of cooperating connecting elements (6) on the respective individual modules (1), which connections are provided between the adjoining f frame beams (3) of the respective individual modules (1), **characterized in that** at least one individual module (1) has at least one alignment device (7) which cooperates with at least two connecting elements (6) for their parallel longitudinal alignment, which connection elements (6) are each mounted rotatably on a frame beams (3) of subsequent frame beams (3) on a common joint nodal point (4).

2. Robot system according to claim 1, **characterized in that** the frame joint (5) is formed as a ball joint with a ball head (9), an inner shell (10) and an outer shell (11) on which ball head (9), inner shell (10) and outer shell (11) each a frame beam (3) connects.

3. Robot system according to claim 1 or 2, **characterized in that** all frame beams (3) of a single module (1) are designed adjustable in length and that each frame beam (3) at its opposite connection sides to the nodal points (4) each has two independently from another rotatably pivoted connecting elements (6).

4. Robot system according to claim 3, **characterized in that** one alignment device (7) each cooperates with two connecting elements (6) each on a frame beam (3) of a common nodal point (4) adjoining frame beams (3) for their parallel longitudinal alignment.

5. Robot system according to one of claims 1 to 4, **characterized in that** the alignment device (7) has coupling linkage (12) provided between the connecting elements (6).

6. Robot system according to claim 5, **characterized in that** the coupling linkage (12) has two via a pivot bearing (14) connected coupling rods (13) which are pivotally connected to the respective connecting element (8).

7. Robot system according to one of claims 1 to 6, **characterized in that** the connecting elements (6) form a snap connection (15) between the individual modules (1).

8. Robot system according to one of claims 1 to 7, **characterized in that** the alignment device (7) cooperates with two complementary connecting elements (6) for their longitudinal orientation.

9. Robot system according to one of claims 1 to 8, **characterized in that** he connecting elements (6) are additionally mounted linearly displaceable on the respective frame beam (3).

## Revendications

1. Système de robot modulaire, auto-reconfigurable, avec plusieurs modules individuels (1) connectés les uns aux autres, chacun ayant un cadre tétraédrique (2) avec des joints de cadre (5) formant point nodal (4) et des poutres de cadre (3) réglables en longueur, adjacentes ces points nodaux (4), et avec une pluralité de connexions détachables d'une pluralité d'éléments de connexion (6) coopérants sur les modules individuels respectifs (1), lesquelles connexions sont prévues entre les poutres de cadre (3) f adjacentes du modules individuels respectifs (1), **caractérisé en ce qu'**au moins un module individuel (1) comporte au moins un dispositif d'alignement (7) qui coopère avec au moins deux éléments de connexion (6) pour leur alignement longitudinal parallèle, lesquels éléments de connexion (6) sont montés de manière à pouvoir être placé sur des poutres de cadre (3) des poutres de cadre (3) suivantes sur un point nodal de liaison commun (4).

2. Système robotique selon la revendication 1, **caractérisé en ce que** l'articulation de châssis (5) est conçue comme une articulation à rotule avec une tête rotule (9), une coque interne (10) et une coque externe (11) sur laquelle une rotule (9), une coque interne (10) et une coque externe (11) sont chacune reliées par une poutre de châssis (3).

3. Système robotique selon la revendication 1 ou 2, **caractérisé en ce que** toutes les poutres de cadre (3) d'un module individuel (1) sont conçues avec une longueur réglable et que chaque poutre de cadre (3) se situe du côté opposé aux points nodaux (4) chacun en comporte deux indépendamment d'un autre élément de connexion (6) pivotant à rotation.

4. Système robotique selon la revendication 3, **caractérisé en ce qu'**un dispositif d'alignement (7) coopère avec deux éléments de connexion (6) situés chacun sur une poutre de cadre (3) d'un point nodal (4) commun adjacents à des poutres de cadre (3) alignement longitudinal.

5. Système robotique selon l'une des revendications 1 à 4, **caractérisé en ce que** le dispositif d'alignement (7) présente une liaison de couplage (12) prévue entre les éléments de connexion (6).

6. Système robotique selon la revendication 5, **caractérisé en ce que** la liaison de couplage (12) présente deux tiges de couplage (13) reliées par un palier pivotant (14) qui sont reliées de manière pivotante à l'élément de connexion (8) respectif.

7. Système robotique selon l'une des revendications 1 à 6, **caractérisé en ce que** les éléments de connexion (6) forment une liaison par encliquetage (15) entre les modules individuels (1).

8. Système robotique selon l'une des revendications 1 à 7, **caractérisé en ce que** le dispositif d'alignement (7) coopère avec deux éléments de connexion (6) complémentaires pour leur orientation longitudinale.

9. Système robotique selon l'une des revendications 1 à 8, **caractérisé en ce que** les éléments de connexion (6) sont en outre montés de manière à pouvoir être déplacés linéairement sur le faisceau de cadre (3) respectif.
